# FASCICULE DE BREVET EUROPEEN

(11) **EP 0 633 149 B1**
(45) Date de publication et mention de la délivrance du brevet: **18.09.1996**
(21) Numéro de dépôt: 94401518.9
(22) Date de dépôt: 01.07.1994
(51) Int. Cl.: B60B 17/00

(54) **Procédé de détermination du tracé de la section axiale d'une roue et roue obtenue**
Verfahren zur Bestimmung der Spur des axialen Querschnitts eines Rades und solches Rad
Determination procedure of the track of the axial section of a wheel and such a wheel

(30) Priorité: 09.07.1993 FR 9308518
(43) Date de publication de la demande: 11.01.1995
(73) Titulaire: VALDUNES, F-92800 Puteaux (FR)
(72) Inventeur: Catot, Bernard, F-59495 Lefrinckoucke (FR); Demilly, François, F-59210 Coudekerque Branche (FR)
(74) Mandataire: Bouget, Lucien

(56) Documents cités:
- EP-A- 0 050 049
- DE-A- 1 926 312
- DE-C- 3 243 028
- GB-A- 424 701

## Description

La présente invention concerne les roues de chemin de fer à faible émission acoustique.

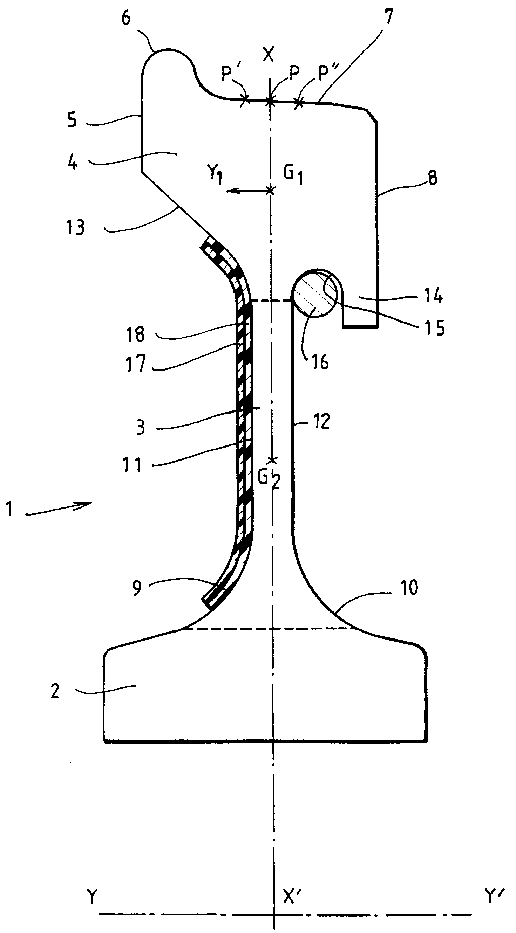

Au contact du rail sur lequel elle roule, une roue de chemin de fer est excitée en vibration ce qui lui fait émettre un bruit de roulement dont la puissance et le spectre de fréquence dépendent du dessin de la roue, de l'état des surfaces en contact et de la vitesse du train; en particulier, pour les trains à grande vitesse la puissance du bruit émis est très élevée et peut atteindre 85 dB acoustiques pour des vitesses supérieures à 250 Km/h.

En fait, une roue de chemin de fer est une pièce destinée à une application particulière. Pour chaque application la roue fait l'objet d'un dessin spécifique qui prend en compte des contraintes géométriques, des contraintes de charge par essieu à supporter et des contraintes de comportement au freinage. Mais les contraintes d'émission acoustique ne sont pas prises en compte il en résulte que les roues sont en général très sonores.

Pour remédier à cet inconvénient diverses techniques ont été proposées qui consistent à disposer sur la roue des résonateurs ou des amortisseurs qui interfèrent avec la roue, modifient ses régimes vibratoires propres et diminuent l'émission acoustique.

Ces techniques présentent l'inconvénient de nécessiter des réglages fins des résonateurs ou des amortisseurs en fonction des fréquences propres de la roue et ces fréquences propres varient chaque fois qu'on rafraîchit la table de roulement par usinage. Il en résulte que chaque roue doit être réglée chaque fois qu'elle est réusinée.

En tout état de cause, ces techniques sont des pis aller.

Le but de la présente invention est de proposer une méthode de conception de roue qui prenne en compte ses performances acoustiques et qui permette pour chaque application de dessiner la roue la moins bruyante possible.

A cet effet, l'invention a pour objet un procédé de détermination du tracé de la section par un plan passant par son axe de rotation d'une roue pour véhicule ferroviaire et notamment d'une roue de chemin de fer à faible émission acoustique du type comprenant un moyeu, une toile et une jante formant un boudin et une table de roulement dont la forme est imposée, destinée à être exploitée sur un réseau ferré constitué de rails ayant un profil déterminé et posés selon des règles propres au réseau ferré, dans lequel on détermine, à partir de la charge par essieu du véhicule, de la vitesse nominale et des conditions de freinage du véhicule, un tracé optimisé de la section de la roue par le plan axial, caractérisé en ce que, pour obtenir en service une émission acoustique de la roue la plus faible possible,
- on détermine de façon connue en elle-même la position, sur la table de roulement du point de contact réel P de la roue avec un rail sur lequel la roue repose en service, à partir de la forme imposée de la table de roulement, du profil du rail et des conditions de pose du rail,
- on ajuste la répartition des masses de la section de la jante et de la toile pour que le point de contact P, le centre d'inertie G1 de la section de la jante et le centre d'inertie G2 de la section de la toile se trouvent sur une même droite XX' perpendiculaire à l'axe YY' de la roue, et
- on ajuste de plus le tracé de la section de la roue pour que le point P soit un noeud de vibrations pour les modes de vibrations axiaux de la jante de la roue en service.

En particulier, le tracé de la section de la jante peut être ajusté de telle sorte que la matrice d'inertie de la section de la jante, calculée dans un repère (G1X, G1Y1) dont l'origine est située au centre d'inertie G1 de la section, dont l'axe G1X est porté par la droite XX' et l'axe G1Y1 parallèle à l'axe YY' de la roue, comporte des termes croisés Ixy et Iyx inférieurs à 10 % de chacun des termes diagonaux Ixx et Iyy. Les résultats sont meilleurs si les termes croisés Ixy et Iyx sont inférieurs à 3 % des termes diagonaux Ixx et Iyy.

De préférence, on choisit un tracé de la section de la toile symétrique par rapport à la droite xx'.

On peut également ajuster le tracé de la section de la toile de façon à ce que la matrice d'inertie de l'ensemble formé par la section de la jante et la section de la toile comporte des termes croisés Ixy et Iyx inférieurs à 10 % et de préférence à 3 % des termes diagonaux Ixx et Iyy.

L'invention a également pour objet une roue de chemin de fer à faible émission acoustique du type comprenant un moyeu, une toile et une jante munie d'un boudin et d'une table de roulement dans laquelle, pour toute section par un plan passant par l'axe de la roue, le point de contact réel de la table de roulement avec un rail, le centre d'inertie de la section de la jante et le centre d'inertie de la section de la toile sont alignés sur une droite xx' perpendiculaire à l'axe de la roue.

De préférence, la section de la toile est symétrique par rapport à la droite xx' et mieux encore la section de la toile est droite, c'est-à-dire qu'elle est délimitée par deux droites sensiblement parallèles à la droite xx'.

Notamment, la section de la jante de la roue de chemin de fer peut comporter une dépouille du côté de la face intérieure de la roue et une masselotte du côté de la face extérieure de la roue, la masselotte étant venue de matière avec la roue ou étant rapportée. La toile et la masselotte peuvent alors délimiter entre elles une gorge dans laquelle on peut placer un jonc de préférence en acier inoxydable.

Pour améliorer les performances acoustiques de la roue, on peut coller un flanc sur la toile au moyen d'une résine ; on peut également galeter la table de roulement.

De préférence, la matrice d'inertie de la section de la jante comporte des termes croisés Ixy et Iyx inférieurs à 10% et de préférence à 3 % des termes diagonaux Ixx et Iyy.

L'invention va maintenant être décrite en regard de l'unique figure annexée qui représente la demi-section d'une roue de chemin de fer par un plan passant par l'axe de la roue.

Une roue de chemin de fer est un corps de révolution engendré par la rotation autour d'un axe YY' d'une section 1 par un plan axial. La section 1 est divisée en trois parties : la section du moyeu 2, la section de la toile 3, la section de la jante 4. La section de la jante 4 comporte des profils correspondant à la face interne 5, au boudin 6, à la bande de roulement 7 et à la face externe 8 de la roue.

Pour chaque application définie par un véhicule ferroviaire caractérisé par une charge par essieu donnée et devant rouler à une vitesse fixée sur un réseau ferré déterminé en utilisant une technique de freinage particulière, l'homme du métier détermine de façon connue la section de la roue de façon à assurer une résistance mécanique suffisante, un comportement au freinage satisfaisant et en général un poids minimal de la roue. Pour cela, il tient compte de contraintes propres au problème particulier, telles que la forme du boudin et de la table de roulement, le diamètre de la roue et utilise des modèles de calcul connus en eux-mêmes.

Mais cette méthode de conception ne prend pas en compte le comportement acoustique de la roue. Cependant elle laisse suffisamment de degrés de liberté pour optimiser le comportement acoustique de la roue.

Pour cela on détermine de façon connue en elle-même par l'homme du métier, le point P de contact réel, le plus probable, de la table de roulement avec le rail en tenant compte du profil de la table de roulement, du profil du rail et des règles de pose des rails propres au réseau ferré sur lequel la roue est destinée à être exploitée. Puis, au cours de la conception de la roue, on impose que le point P, le centre d'inertie G1 de la section de la jante et le centre d'inertie G2 de la section de la toile soient alignés sur une droite XX' perpendiculaire à l'axe YY' de la roue. Cela revient à répartir les masses des sections de la jante et de la toile de telle façon que la condition précédente soit respectée.

Enfin on ajuste le tracé du profil de la section 4 de la jante de façon à ce que le point P soit un noeud pour les modes de vibration axiaux (c'est-à-dire parallèles à l'axe YY') de la jante. Pour cela on procède par tâtonnement soit en utilisant des modèles de calcul du comportement vibratoire d'une roue de chemin de fer, connus en eux-mêmes, soit en faisant des expérimentations.

De plus, il est préférable d'imposer comme condition que la matrice d'inertie de la section 4 de la jante, calculée dans le repère (G1X, G1Y1) dont l'origine est le centre d'inertie G1 de la section 4 de la jante dont les axes sont parallèles aux axes X'X et Y'Y soit quasiment diagonale, ce qui veut dire que les termes croisés Ixy et Iyx soient petits devant les termes diagonaux Ixx et Iyy. En pratique, on impose que Ixy et Iyx soient inférieurs à 10 % de Ixx et de Iyy.

Le résultat et d'autant meilleur que Ixy et Iyx sont plus petits ; aussi, il est préférable d'imposer que Ixy et Iyx soient inférieurs à 3 % de Ixx et de Iyy ; l'idéal étant que Ixy et Iyx soient nuls.

Ces contraintes laissent peu de liberté pour le choix de la forme de la section 3 de la toile et en particulier de sa fibre neutre. Cependant, il est préférable de choisir une fibre neutre droite portée par la droite XX' et une forme pour la section 3 de la toile, symétrique par rapport à la droite XX'.

Pour optimiser la forme de la section 3 de la toile on peut imposer en outre que la matrice d'inertie de l'ensemble formé par la section 3 de la toile et la section 4 de la jante soit quasiment diagonale, c'est-à-dire que les termes croisés Ixy et Iyx soient inférieurs à 10 % et de préférence à 3 % des termes diagonaux Ixx et Iyy.

En procédant ainsi on obtient une roue dont l'émission acoustique est faible. En effet, le bruit de roulement est provoqué par les vibrations axiales de la toile. Or ces vibrations sont excitées par les efforts radiaux exercés sur le point P par le contact rail/roue et les règles de conception décrites sont telles que le couplage entre une excitation radiale et les vibrations axiales est très faible.

Cependant, dans les parties courbes des voies ferrées, les véhicules sont soumis à des efforts latéraux qui déplacent en P' ou P'' (selon que la roue est intérieure ou extérieure au virage) le point P de contact de la roue avec le rail. Pour que la roue ait un comportement acoustique satisfaisant non seulement en ligne droite mais aussi en courbe, il faut vérifier que pour des excitations en P' et en P'', la roue a un comportement vibratoire acceptable et si nécessaire, ajuster par tâtonnement la forme de la section de la jante et éventuellement de la section 3 de la toile.

Ce procédé a permis de concevoir une roue pour train à grande vitesse à faible émission acoustique dont le point P de contact réel, le plus probable, le centre d'inertie G1 de la section 4 de la jante et le centre d'inertie G2 de la section 3 de la toile sont alignés sur une droite XX' perpendiculaire à l'axe YY' de la roue. La section 3 de la toile est symétrique par rapport à XX' et droite, c'est-à-dire que, mis à part les rayons de raccordement 9 et 10 avec la section 2 du moyeu, les bords 11 et 12 de la section 3 sont des segments de droites parallèles à XX'.

Outre le profil du boudin 6, la table de roulement 7, la face interne 5 et la face externe 8, la section 4 de la jante comporte, du côté de la face interne 5, une dépouille 13 inclinée par rapport à la droite XX' et qui relie la face interne 5 à la toile, et du côté de la face externe 8, une masselotte 14 qui délimite avec la toile 3, une gorge 15. La masselotte 14 qui, sur la roue, constitue une couronne, est venue de matière avec la roue, mais elle pourrait être remplacée par une masselotte rapportée fixée par exemple par des vis.

Pour améliorer le comportement acoustique de cette roue, on peut notamment, placer dans la gorge 15 un jonc 16 en acier inoxydable, ce qui réduit les bruits de crissement.

On peut enfin disposer sur la toile de la roue un flanc 17 collé par une couche 18 de résine par exemple de népurane.

La présente invention s'applique à toute sorte de roue de chemin de fer et plus généralement peut être adaptée à la conception de toute roue de véhicule terrestre.

## Revendications

1. Procédé de détermination du tracé de la section par un plan passant par son axe de rotation (YY') d'une roue pour véhicule ferroviaire (1) et notamment d'une roue de chemin de fer à faible émission acoustique du type comprenant un moyeu (2), une toile (3) et une jante (4) formant un boudin (6) et une table de roulement (7) dont la forme est imposée, destinée à être exploitée sur un réseau ferré constitué de rails ayant un profil déterminé et posés selon des règles propres au réseau ferré, dans lequel on détermine, à partir de la charge par essieu du véhicule, de la vitesse nominale et des conditions de freinage du véhicule, un tracé optimisé de la section de la roue (1) par le plan axial, caractérisé en ce que, pour obtenir en service une émission acoustique de la roue (1) la plus faible possible,
- on détermine de façon connue en elle-même la position, sur la table de roulement (7) du point de contact réel P de la roue (1) avec un rail sur lequel la roue (1) repose en service, à partir de la forme imposée de la table de roulement (7), du profil du rail et des conditions de pose du rail,
- on ajuste la répartition des masses de la section de la jante (4) et de la toile (3) pour que le point de contact P, le centre d'inertie G1 de la section de la jante (4) et le centre d'inertie G2 de la section de la toile (3) se trouvent sur une même droite (XX') perpendiculaire à l'axe (YY') de la roue (1), et
- on ajuste de plus le tracé de la section de la roue pour que le point P soit un noeud de vibrations pour les modes de vibrations axiaux de la jante (4) de la roue (1) en service.

2. Procédé selon la revendication 1, caractérisé en ce qu'on ajuste le tracé de la section de la jante (4) de telle sorte que la matrice d'inertie de la section de la jante (4) calculée dans un repère (G1X, G1Y1) dont l'origine est située au centre d'inertie G1 de la section, dont l'axe G1X est porté par la droite XX' et l'axe G1Y1 parallèle à l'axe YY' de la roue, comporte des termes croisés Ixy et Iyx inférieurs à 10 % de chacun des termes diagonaux Ixx et Iyy.

3. Procédé selon la revendication 2 caractérisé en ce qu'on ajuste le tracé de la section de la jante (4) de façon que les termes croisés Ixy et Iyx de la matrice d'inertie soient inférieurs à 3 % des termes diagonaux Ixx et Iyy.

4. Procédé selon l'une quelconque des revendications 1 à 3, caractérisé en ce qu'on définit un tracé de la section de la toile symétrique par rapport à la droite XX'.

5. Procédé selon la revendication 1, caractérisé en ce qu'on ajuste le tracé de la section de la toile de façon que la matrice d'inertie de l'ensemble formé par la section de la jante (4) et la section de la toile (3) calculée dans le repère (G1X, G1Y1) comporte des termes croisés Ixy et Iyx inférieurs à 10 % et de préférence à 3 % des termes diagonaux Ixx et Iyy.

6. Roue de chemin de fer à faible émission acoustique du type comprenant un moyeu (2), une toile (3) et une jante (4) munie d'un boudin (6) et d'une table de roulement (7) caractérisée en ce que pour toute section de la roue (1) par un plan passant par l'axe de rotation YY' de la roue, le point de contact réel P de la table de roulement (7) avec un rail sur lequel la roue (1) repose en service, le centre d'inertie G1 de la section de la jante (4) et le centre d'inertie G2 de la section de la toile (3) sont alignés sur une droite XX' perpendiculaire à l'axe YY' de la roue (1).

7. Roue de chemin de fer selon la revendication 6, caractérisée en ce que la section de la toile (3) est symétrique par rapport à la droite XX'.

8. Roue de chemin de fer selon la revendication 7, caractérisée en ce que la section de la toile (3) est délimitée par deux droites sensiblement parallèles à la droite XX'.

9. Roue de chemin de fer selon la revendication 7 ou la revendication 8, caractérisée en ce que la section de la jante (4) comporte une dépouille (13) du côté de la face intérieure de la roue (1) et une masselotte (14) du côté de la face extérieure de la roue (1), la masselotte (14) étant venue de matière avec la roue (1) ou étant rapportée.

10. Roue de chemin de fer selon la revendication 9, caractérisée en ce que la masselotte (14) et la toile (3) délimitent entre elles une gorge (15).

11. Roue de chemin de fer selon la revendication 10, caractérisée en ce qu'elle comporte un jonc (16) de préférence en acier inoxydable placé dans la gorge (15) délimitée par la masselotte (14) et la toile (3).

12. Roue de chemin de fer selon l'une quelconque des revendications 6 à 11, caractérisée en ce qu'elle comporte en outre un flanc (17) collé sur la toile (3) par l'intermédiaire d'une résine (18).

13. Roue de chemin de fer selon l'une quelconque des revendications précédentes caractérisée en ce que la table de roulement (7) est galetée.

14. Roue de chemin de fer selon l'une quelconque des revendications 6 à 13, caractérisée en ce que la matrice d'inertie de la section de la jante calculée dans un repère (G1X, G1Y1) dont l'origine est située au centre d'inertie G1 de la section, dont l'axe G1X est porté par la droite XX' et l'axe G1Y1 parallèle à l'axe YY' de la roue comporte des termes croisés Ixy et Iyx inférieurs à 10 % et de préférence à 3 % des termes diagonaux Ixx et Iyy.

## Claims

1. Method for determining the plot of the section through a plane passing through its rotational axis (YY') of a wheel for a rail vehicle (1) and notably of a railway wheel with low noise emission of the type comprising a hub (2), a web (3) and a rim (4) forming a flange (6) and a running surface (7) whose shape is imposed, designed to be used on a rail network consisting of rails having a profile determined and set according to the rules of the rail network, in which there is determined, from the axle loading of the vehicle, the nominal speed and the braking conditions of the vehicle, an optimised plot of the section of the wheel (1) through the axial plane, characterised in that, to achieve in service the lowest possible noise emission from the wheel (1),
- the position is determined, in a manner known per se, on the running surface (7), of the actual point of contact P of the wheel (1) with a rail on which the wheel (1) rests when in service, from the imposed shape of the running surface (7), the profile of the rail and the laying conditions of the rail,
- the distribution of the weights of the section of the rim (4) and of the web is adjusted so that the point of contact P, the centre of inertia G1 of the section of the rim (4) and the centre of inertia G2 of the section of the body (3) are to be found on the same straight line (XX') perpendicular to the axis (YY') of the wheel (1), and
- the plot of the section of the wheel is again adjusted so that the point P is a vibration node for the axial vibration modes of the rim (4) of the wheel (1) in service.

2. Method according to Claim 1, characterised in that the plot of the section of the rim is adjusted so that the inertial matrix of the section of the rim (4) calculated in a reference frame (G1X, G1Y1) whose origin is situated at the centre of inertia G1 of the section, whose axis G1X is carried by the straight line XX' and whose axis G1Y1 is parallel to the axis YY' of the wheel, has cross terms Ixy and Iyx less than 10% of each of the diagonal terms Ixx and Iyy.

3. Method according to Claim 2, characterised in that the plot of the section of the rim (4) is adjusted so that the cross terms Ixy and Iyx of the inertial matrix are less than 3% of the diagonal terms Ixx and Iyy.

4. Method according to any one of Claims 1 to 3, characterised in that a plot of the section of the web is defined symmetrical with respect to the straight line XX'.

5. Method according to Claim 1, characterised in that the plot of the section of the web is adjusted so that the inertial matrix of the whole formed by the section of the rim (4) and the section of the web (3) calculated in the reference frame (G1X, G1Y1) has cross terms Ixy and Iyx less than 10% and preferably less than 3% of the diagonal terms Ixx and Iyy.

6. Railway wheel with low noise emission of the type comprising a hub (2), a web (3) and a rim (4) provided with a flange (6) and a running surface (7), characterised in that, for any section of the wheel (1) through a plane passing through the rotational axis YY' of the wheel, the actual point of contact P of the running surface (7) with a rail on which the wheel (1) rests when in service, the centre of inertia G1 of the section of the rim (4) and the centre of inertia G2 of the section of the web (3) are aligned on a straight line XX' perpendicular to the axis YY' of the wheel (1).

7. Railway wheel according to Claim 6, characterised in that the section of the web (3) is symmetrical with respect to the straight line XX'.

8. Railway wheel according to Claim 7, characterised in that the section of the web (3) is delimited by two straight lines substantially parallel to the straight line XX'.

9. Railway wheel according to Claim 7 or Claim 8, characterised in that the section of the rim (4) has a taper (13) on the internal face of the wheel (1) and a weight (14) on the external face of the wheel (1), the weight (14) being made in one piece with the wheel (1) or being attached.

10. Railway wheel according to Claim 9, characterised in that the weight (14) and web (3) between them define a groove (15).

11. Railway wheel according to Claim 10, characterised in that it includes a ring (16) preferably of stainless steel placed in the groove (15) defined by the weight (14) and web (3).

12. Railway wheel according to any one of Claims 6 to 11, characterised in that it also includes a flank (17) bonded to the web (3) by means of a resin (18).

13. Railway wheel according to any one of the preceding claims, characterised in that the running surface (7) is burnished.

14. Railway wheel according to any one of Claims 6 to 13, characterised in that the inertial matrix of the section of the rim calculated in a reference frame (G1X, G1Y1) whose origin is situated at the centre of inertia G1 of the section, whose axis G1X is carried by the straight line XX' and whose axis G1Y1 is parallel to the axis YY' of the wheel, has cross terms Ixy and Iyx less than 10% and preferably less than 3% of the diagonal terms Ixx and Iyy.

## Patentansprüche

1. Verfahren zur Bestimmung des Verlaufs des Schnitts eines Rades für ein Schienenfahrzeug (1) mit einer durch seine Drehachse (YY') gehenden Ebene, und insbesondere eines Eisenbahnrades mit geringer akustischer Emission einer Art mit einer Nabe (2), einer Scheibe (3) und einer Felge (4), welche einen Spurkranz (6) und eine Lauffläche (7) bildet, deren Form vorgeschrieben ist, bestimmt zur Verwendung auf einem Schienennetz, welches durch Schienen gebildet ist, die ein vorgegebenes Profil haben und nach dem Schienennetz eigenen Regeln verlegt sind, nach welchem man ausgehend von der Achslast des Fahrzeugs, der Nenngeschwindigkeit und den Bremsbedingungen des Fahrzeugs einen optimierten Verlauf des Schnitts des Rades (1) mit der Axialebene bestimmt, dadurch gekennzeichnet, daß zur Erzielung einer geringstmöglichen akustischen Emission des Rades (1) im Betrieb
- in an sich bekannter Weise auf der Lauffläche (7) die Lage des tatsächlichen Berührpunkts P des Rades (1) mit der Schiene, auf welcher das Rad (1) im Betrieb aufruht, ausgehend von der vorgeschriebenen Form der Lauffläche (7), des Schienenprofils und den Verlegungsbedingungen der Schiene, bestimmt wird,
- die Verteilung der Massen des Schnitts der Felge (4) und der Scheibe (3) so eingestellt wird, daß der Berührpunkt P, das Trägheitszentrum G1 des Schnitts der Felge (4) und das Trägheitszentrum G2 des Schnitts der Scheibe (3) sich auf ein und derselben zur Achse (YY') des Rades (1) senkrechten Geraden (XX') befinden, und
- ferner der Verlauf des Schnitts des Rades so eingestellt wird, daß der Punkt P ein Schwingungsknoten für die axialen Schwingungsmoden der Felge (4) des Rades (1) im Betrieb ist.

2. Verfahren nach Anspruch 1, dadurch gekennzeichnet, daß der Verlauf des Schnitts der Felge (4) so eingestellt wird, daß die Trägheitsmatrix des Schnitts der Felge (4) berechnet in einer Markierung (G1X, G1Y1), deren Ursprung im Trägheitszentrum (G1) des Schnitts liegt, deren Achse G1X auf der Geraden XX' liegt und deren Achse G1Y1 zur Achse YY' des Rades parallel ist, Kreuzterme Ixy und Iyx aufweist, die unter 10% jedes der Diagonalterme Ixx und Iyy liegen.

3. Verfahren nach Anspruch 2, dadurch gekennzeichnet, daß der Verlauf des Schnitts der Felge (4) so eingestellt wird, daß die Kreuzterme Ixy und Iyx der Trägheitsmatrix kleiner als 3% der Diagonalterme Ixx und Iyy sind.

4. Verfahren nach irgendeinem der Ansprüche 1 bis 3, dadurch gekennzeichnet, daß ein Verlauf des Schnitts der Scheibe symmetrisch in Bezug auf die Gerade XX' definiert wird.

5. Verfahren nach Anspruch 1, dadurch gekennzeichnet, daß der Verlauf des Schnitts der Scheibe so eingestellt wird, daß die Trägheitsmatrix des durch den Schnitt der Felge (4) und den Schnitt der Scheibe (3) gebildeten Aufbaus, berechnet in der Markierung (G1X, G1Y1), Kreuzterme Ixy und Iyx aufweist, die unter 10% und Vorzugsweise bei 3% der Diagonalterme Ixx und Iyy liegen.

6. Eisenbahnrad mit geringer akustischer Emission der Art mit einer Nabe (2), einer Scheibe (3) und einer Felge (4), die mit einem Spurkranz (6) und einer Lauffläche (7) versehen ist, dadurch gekennzeichnet, daß für den gesamten Schnitt des Rades (1) mit einer durch die Drehachse XX' des Rades gehenden Ebene der tatsächliche Berührpunkt der Lauffläche (7) mit einer Schiene, auf welcher das Rad (1) im Betrieb aufruht, das Trägheitszentrum G1 des Schnitts der Felge (4) und das Trägheitszentrum G2 das Schnitts der Scheibe (3) auf einer zur Achse YY' des Rades (1) senkrechten Geraden ausgerichtet sind.

7. Eisenbahnrad nach Anspruch 6, dadurch gekennzeichnet, daß der Schnitt der Scheibe (3) in Bezug auf die Gerade XX' symmetrisch ist.

8. Eisenbahnrad nach Anspruch 7, dadurch gekennzeichnet, daß der Schnitt der Scheibe (3) durch zwei zur Geraden XX' im wesentlichen parallele Geraden begrenzt wird.

9. Eisenbahnrad nach Anspruch 7 oder Anspruch 8, dadurch gekennzeichnet, daß der Schnitt der Felge (4) eine Formschräge (13) auf der Innenseite des Rades (1) und ein Gewicht (14) auf der Außenseite des Rades (1) aufweist, wobei das Gewicht (1) mit dem Rad (1) einstückig oder an dieses angesetzt ist.

10. Eisenbahnrad nach Anspruch 9, dadurch gekennzeichnet, daß das Gewicht (14) und die Scheibe (3) zwischen sich eine Nut (15) bestimmen.

11. Eisenbahnrad nach Anspruch 10, dadurch gekennzeichnet, daß es einen in der durch den Anguß (14) und die Scheibe (3) gebildeten Nut (15) angeordneten Ring (16), vorzugsweise aus rostfreiem Stahl aufweist.

12. Eisenbahnrad nach irgendeinem der Ansprüche 6 bis 11, dadurch gekennzeichnet, daß es ferner eine an die Scheibe (3) mittels eines Harzes (18) geklebte Flanke (17) aufweist.

13. Eisenbahnrad nach irgendeinem der vorstehenden Ansprüche, dadurch gekennzeichnet, daß die Lauffläche (7) prägepoliert ist.

14. Eisenbahnrad nach irgendeinem der Ansprüche 6 bis 13, dadurch gekennzeichnet, daß die Trägheitsmatrix des Schnitts der Felge, berechnet in einer Markierung (G1X, G1Y1), deren Ursprung im Trägheitszentrum G1 des Schnitts liegt, deren Achse G1X auf der Geraden XX' liegt und deren Achse G1Y1 zur Achse YY' des Rades parallel ist, Kreuzterme Ixy und Iyx aufweist, die unter 10% und vorzugsweise bei 3% der Diagonalterme Ixx und Iyy liegen.
